# EUROPEAN PATENT APPLICATION

(11) **EP 1 582 504 A1**
(43) Date of publication of application: **05.10.2005**
(21) Application number: 05102292.9
(22) Date of filing: 22.03.2005
(51) Int. Cl.: C01B 21/04, B01D 53/22, E21B 21/16

(54) **Method and system for producing inert gas from combustion by-products**

(30) Priority: 23.03.2004 US 555793
(71) Applicant: Pacific Consolidated Industries, LLC, Riverside, CA 92503 (US)
(72) Inventor: KEITH, Michael, 19380, Westchester (US)
(74) Representative: Gervasi, Gemma

(57) **Abstract**

A method for producing inert gas comprises operating a combustion engine, which produces an exhaust gas comprising inert gas and non-inert gas, using power from the combustion engine to compress the exhaust gas, and separating a portion of the inert gas from the non-inert gas contained in the exhaust gas. The separation means may comprise a membrane. A corresponding system comprising a combustion engine (220), a compressor (246) and a separation device (266).

## Description

### Priority Information

The present application is based on and claims priority to United States Provisional Patent Application No. 60/555,793, filed March 23, 2004, the entire contents of which is hereby expressly incorporated by reference.

### Background of the Inventions

### Field of the Inventions

The present inventions are directed to systems and methods for generating inert gas, and more particularly, systems and methods for producing inert gas from combustion byproducts.

### Description of the Related Art

In the art of drilling, such as drilling for oil or natural gas, inert gases are commonly used for numerous purposes. Typically, inert gases are often used to displace oxygen from the volume of space above a liquid surface in a storage tank used for storing flammable substances, such as, for example, crude oil. Additionally, inert gases are often used to suppress fire or explosion and prevent corrosion during a drilling operation.

Inert gas may also be used during a drilling operation. For example, an inert gas such as nitrogen, can be injected into a borehole during a drilling operation to prevent ignition of substances within the borehole and to prevent corrosion of the drill bit.

### Summary of the Inventions

An aspect of at least one of the embodiments disclosed herein includes the realization that gas separation units, such as those used for separating nitrogen from air, can be converted into a high-purity, compact, and portable inert gas generators by including an air/fuel engine that provides shaft power for driving the separating device as well as supplies oxygen-reduced exhaust gas to the separation unit. In such an arrangement, the air/fuel engine performs the dual purposes of providing shaft power for the separation unit and reducing the oxygen content of the gases fed into the separation unit. As such, a further advantage can be achieved by disposing an air/fuel engine and a separation unit in a common assembly, such as, for example, but without limitation, a skid mounted unit, an ISO container sized-unit, or other portable assemblies. As such, the entire unit can be transported, started and used with greater speed, thereby reducing the time necessary for beginning a drilling operation or other types of field operations.

In accordance with one embodiment, a method for producing inert gas is provided. The method includes operating a combustion engine so as to produces an exhaust gas, the exhaust gas comprising non-inert gas and inert gas, the volume percentage of non-inert gas of the exhaust gas is less than the volume percentage of non-inert gas of ambient air. The method also includes using power from the combustion engine to compress the exhaust gas and separating a portion of the inert gas from the non-inert gas contained in the exhaust gas.

In accordance with another embodiment, a system for producing inert gas comprises an air/fuel engine having an exhaust outlet, a compressor having a compressor outlet and an inlet communicating with the exhaust outlet. The compressor is powered by the engine and is configured to compress exhaust gas from the engine. A separation device includes a separation inlet communicating with the compressor outlet and is configured to separate inert and non-inert gases from the exhaust.

In accordance with yet another embodiment, a system for producing inert gas comprises a compressor having a compressor outlet and an inlet, the compressor being configured to compress source gas. A separation device includes a separation inlet communicating with the compressor outlet and is configured to separate inert and non-inert gases from the source gas. The system also includes at least one single means for providing both source gas and power to the compressor.

### Brief Description of the Drawings

Figure 1 is a schematic view of a drilling stem arrangement showing delivery of an inert gas to a downhole drilling region.

Figure 2 is a cross-sectional schematic view of a well with a horizontally disposed section including casings and upper and lower liners with an inert rich gas present therein.

Figure 3 is a cross-sectional schematic view of an initial injecting of a cement slurry for cementing a casing within a well.

Figure 4 is a cross-sectional schematic view of the casing of Figure 3 with the cement in place to secure the casing within the well.

Figure 5 is a cross-sectional schematic view of a well and equipment for removing gas and/or oil from a well with the assistance of an inert rich gas.

Figure 6 is a cross-sectional schematic view of a reservoir and the injection of an inert rich gas to remove gas and/or oil from the reservoir.

Figure 7 is a schematic diagram of an embodiment of an inert gas separation system in which exhaust from an engine is subjected to a separation process to separate inert gas therefrom.

Figure 7A is a schematic illustration of an embodiment of the separation system of Figure 7.

Figure 7B is a schematic illustration of an embodiment of the separation system of Figure 7.

Figure 7C is a schematic illustration of another embodiment of the separation system of Figure 7.

Figure 8 is a schematic diagram of another embodiment in which exhaust from an engine is subjected to a separation process to produce inert rich gas therefrom.

### Detailed Description of the Preferred Embodiment

The present embodiments generally relate to an improved system and methods for producing inert gases. The systems and methods for producing inert gases are generally described in conjunction with the production of inert gas, such as nitrogen gas (N₂), for use during a drilling operation because this is an application in which the present systems and methods have particular utility. Additionally, the systems and methods can be used to produce inert gas having different levels of purity. Those of ordinary skill in the relevant art can readily appreciate that the present systems and methods described herein can also have utility in a wide variety of other settings, for example, but without limitation, offshore drilling rigs as discussed in greater detail below.

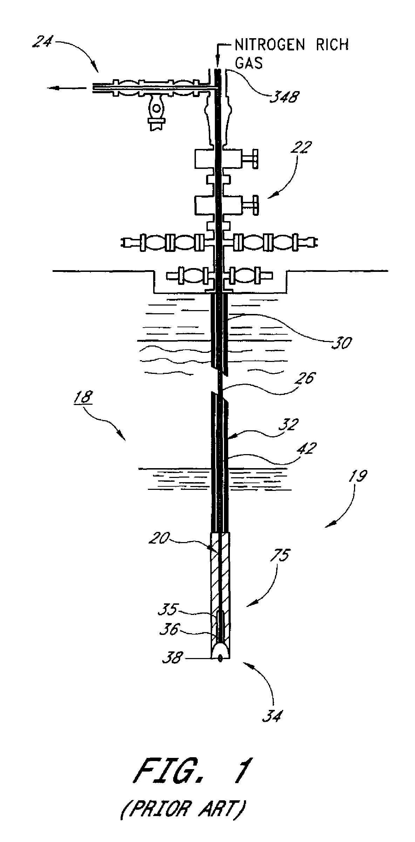

Figure 1 is a schematic view of a typical drill stem arrangement 18 showing the delivery of an inert rich gas to a downhole drilling region 19. Generally, inert rich gas flows down the drill stem arrangement 18 until it reaches a drill stem assembly 20 which is typically connected in lengths known as "pipe stands". The drill stem assembly 20 can be fed through the well head assembly (identified generally by numeral 22) which may contain a series of pipe rams, vents, and choke lines. The inert rich gas is exhausted through an outlet 24 which is connected to a blooey line.

For non-drilling applications, the drill stem assembly 20 may be removed and the inert rich gas can be pumped into the downhole region through the pathway 26.

The surface installation may optionally include an injector manifold (not shown) for injecting chemicals, such as surfactants and special foaming agents, into the inert rich gas feed stream, to help dissolve mud rings formed during drilling or to provide a low density, low velocity circulation medium of stiff and stable foam chemicals to cause minimum disturbance to unstable or unconsolidated formations.

Extending below the surface of the ground into the downhole region is the drill stem arrangement 18 which provides a pathway for the flow of pressurized inert rich gas to the drilling region. There is also provided a second pathway for the flow of nitrogen gas and the drill cuttings out of the downhole region and away from the drilling operation.

With continued reference to Figure 1, the drill stem arrangement includes an outlet or surface pipe 24, a casing 32. The drill stem assembly 20 extends concentrically with and spaced apart from the surface pipe 24 and production casing 32 so as to define a pathway 42 for the return of inert rich gas and the drill cuttings. The center of the drill stem assembly 20 provides a pathway 26 for the flow of inert rich gas to the drilling region. At the lower end 75 of the drill stem arrangement 18, in vicinity of the lower drilling region 34, is a conventional tool joint 35, a drill collar 36 and a drill bit 38.

The inert rich gas (e.g., nitrogen rich gas) is typically pressurized by a compressor and is then delivered to the drill stem assembly 20. Because the inert rich gas is under pressure, it can swirl around the drilling region 34 with sufficient force and velocity to carry the drill cuttings upwards into the pathway 42. The drill cutting containing stream then exits the outlet 24 of the surface installation equipment where it is carried to a blooey line and eventually discarded into a collection facility, typically at a location remote from the actual drilling site.

The inert rich gas described above for removing drilling cuttings can also be injected into the drilling fluid to reduce the density thereof. This provides greater control over the drilling fluid and is particularly adapted for "under balanced" drilling where the pressure of the drilling fluid is reduced to a level below the formation pressure exerted by the oil and/or gas formation. The inert rich gas can be provided to the drilling fluid in the following exemplary but non-limiting manner.

With continued reference to Figure 1, the inert rich gas can be injected into a drilling fluid through an assembly shown in Figure 1 absent the drill stem assembly 20. In one embodiment, the inert rich gas is pumped through the pathway 26 which can be in the form of linear pipe strings or continuous coiled tubing known as a "drill string". Alternatively, the inert rich gas can be pumped into the annular space 42 between the drill string or pathway 26 and the casing 32 inserted into the well. In this embodiment a drill string can be inserted directly into the annular space 42 to provide the inert rich gas directly therein. As such, the inert rich gas can be used to modify the flow properties and weight distribution of the cement used to secure the casings within the well.

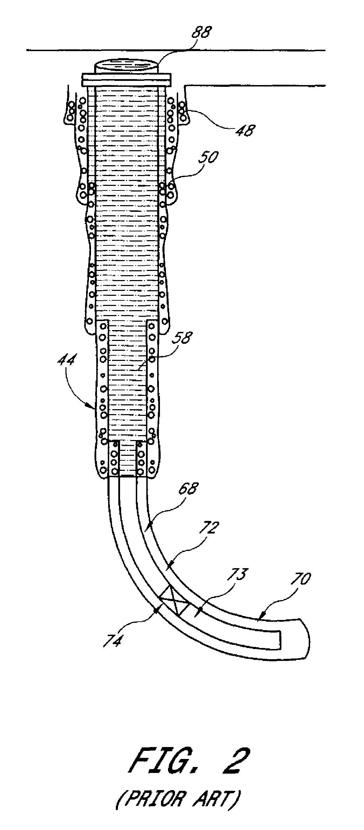

With reference to Figures 2, 3 and 4, a well 44 is supported by tubular casings including an intermediate casing 88, a surface casing 50, and a conductor casing 48. The conductor casing 48 is set at the surface to isolate soft topsoil from the drill bit so as to prevent drilling mud from eroding the top section of the well bore.

The surface casing 50 also extends from the surface of the well and is run deep enough to prevent any freshwater resources from entering the well bore. In addition to protecting the fresh water, the surface casing 50 prevents the well bore from caving in and is an initial attachment for the blow-out-prevention (BOP) equipment. Typical lengths of the surface casing 50 are in the range of from about 200 to 2500 ft.

The intermediate casing 88 protects the hole from formations which may prove troublesome before the target formation is encountered. The casing 88 can be intermediate in length, i.e., longer than the surface casing 50, but shorter than the final string of casing (production casing) 32.

The production casing (oil string or long string) extends from the bottom of the hole back to the surface. It isolates the prospective formation from all other formations and provides a conduit through which reserves can be recovered.

The diameter of the various casings 48, 50, 88 decreases as the depth of the casing into the well 44 increases. Accordingly, the intermediate casing 88 extends the furthest into the well 44. The intermediate casing 88 is typically filled with a drilling fluid 58 such as drilling mud.

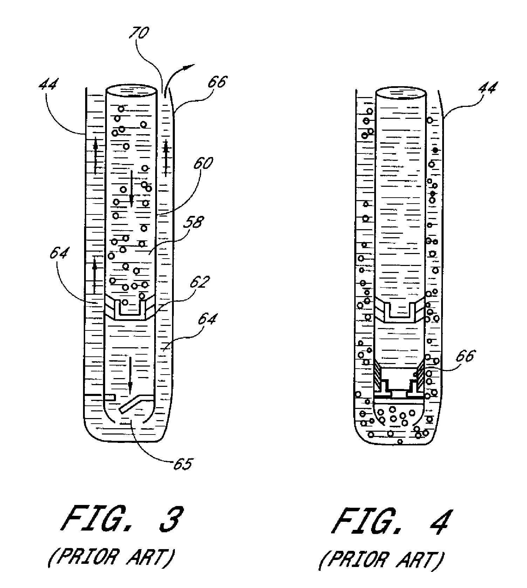

The process of securing the casing within the well using a cement-like material is illustrated in Figures 3 and 4. With reference to Figure 3, a well 44 contains a casing 60 which is initially filled with a drilling fluid 58 such as drilling mud or a drilling mud modified with a nitrogen rich gas. A wiper plug 62 is inserted into the casing 60 and urged downward to force the drilling fluid out of the bottom opening 65 and up along the annular space 64 between the walls 66 defining the well bore and the casing 60. The drilling fluid proceeds upwardly through the annular space 64 and out of the opening 70 at the top of the well 44.

While the drilling fluid is being evacuated a cement-like material in the form of a slurry is loaded into the casing 60. A second wiper plug 66 is then urged downwardly as shown in Figure 4 to force the cement out of the bottom opening 65 until the annular space 64 is filled. Excess cement escapes out of the opening 70 of the well.

An inert rich gas, preferably nitrogen gas, which can be produced as described below, can be used to reduce the density of the cement in a manner similar to that described for the drilling fluid. The inert rich gas can be injected into the casing while the cement is being added therein. The injection of the inert rich gas into the cement modifies the density and flow characteristics of the cement while the cement is being positioned in the well.

The inert rich gas is injected into the casing through a drill string of the type described in connection with Figure 1 with the drill stem assembly 20 removed. The rate of injection and the precise composition of the inert rich gas is controlled by a compressor.

The inert rich gas can be used to improve the buoyancy of the casings so as to minimize the effects of friction as the casings are inserted into the well. This is particularly apparent when casings are inserted into horizontal sections in the downhole region. In horizontal sections, the weight of the casing causes it to drag along the bottom surface of the wellbore. In extreme cases the casing may become wedged in the wellbore and not be able to be advanced as far into the downhole region as desirable. Introducing an inert rich gas into the interior of the casing will increase the buoyancy of the casing, allowing it to float in the mud or drilling fluid surrounding the casing.

With continued reference to Figure 2, there is shown a casing assembly including a tubular member or liner 68 which is designed to enter a horizontal section 70 of the well 44. The liner 68 is any length of casing that does not extend to the surface of the well.

The liner 68 includes an upper section 72 which contains a drilling fluid and a lower section 73. The upper and lower sections are separated by an inflatable packer 74. The lower section 73 is charged with the inert rich gas which makes it lighter and more buoyant than the upper section 72 which is filled with mud. The lower section 73 may therefore move easily into the horizontal section 70 of the well 44.

After the completion of drilling in the downhole region, inert rich gas can be used to improve well performance and maximize output of gas and/or oil from the reservoir. Quite often well production declines because of the presence of fluids, such as water, excess drilling mud and the like in the downhole region. The inert rich gas can be used to clean out the well by displacing the heavier fluids that collect therein. Removal of the heavier fluids will regenerate the flow of gas and/or oil from the reservoir if there is sufficient formation pressure within the reservoir. The inert rich gas can be used to provide an additional boost for lifting the gas and/or oil from the downhole region to a collection area. In this case the inert rich gas is pumped down into the downhole region within the casing under sufficient pressure so that the gas and/or oil entering the downhole region from the reservoir is lifted upwardly and out of the well.

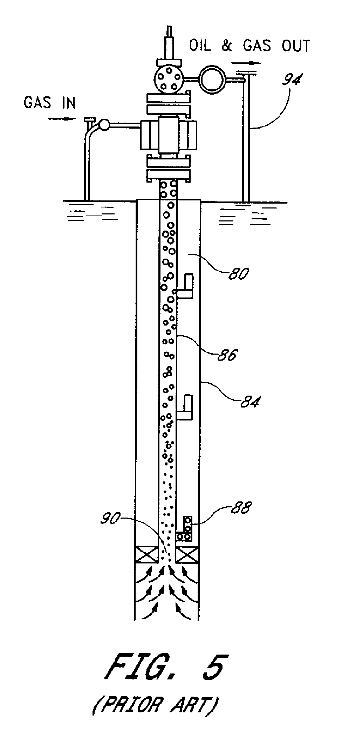

With reference to Figure 5, there is shown an assembly particularly suited for injecting an inert rich gas into the gas and/or oil within the downhole region to facilitate delivery thereof upwardly through the well for collection. Such a system is applicable to downholes having reduced formation pressure. As a result the gas and/or oil has difficulty entering the downhole from the reservoir.

The inert rich gas can be injected into the annulus 80 between the casing 84 and a tubing 86. The inert rich gas is metered into the tubing 86 through a valve assembly 88. The tubing 86 has an opening 90 enabling gas and/or oil from the downhole region to enter and rise up to the surface of the well. The injection of the inert rich gas from the valve assembly 88 into the tubing 86 assists the gas and/or oil by providing buoyancy to the flow upwardly to the above ground collection area 94. This process is commonly referred to as artificial gas lift.

In another application for inert rich gas, the nitrogen rich gas is used to stimulate the well in the downhole region to enhance gas and/or recovery. More specifically, the walls of the wellbore in the downhole region characteristically have cracks or fissures through which the gas and/or oil emerges from the reservoir. As the pressure in the reservoir decreases, the fissures begin to close thereby lowering production. The most common form of stimulating the downhole region is by acidizing or fracturing the wellbore. The inert rich gas can be used as a carrier for the acid to treat the wellbore. The inert rich gas expands the volume of the acid, retards the reaction rate of the acid resulting in deeper penetration and permits faster cleanup because there is less liquid to be displaced by the high energy inert rich gas.

Cracking of the wellbore in the downhole region can be performed by pumping a fluid such as acid, oil, water or foam into a formation at a rate that is faster than the existing pore structure will accept. At sufficiently high pressures, the formation will fracture, increasing the permeability of the downhole. When the stimulation procedure is completed, the pressure in the formation will dissipate and the fracture will eventually close. Sand and/or glass beads or other so-called "poppants" may be injected into the formation and embedded in the fractures to keep the fractures open. The inert rich gas may be used as a carrier gas to carry the poppants to the wellbore.

It is well established that the pressure in a reservoir (formation pressure) provides for the flow of gas and/or oil to the downhole region. As the reserves of gas and/or oil become depleted, the formation pressure decreases and the flow gradually decreases toward the well. Eventually the flow will decrease to a point where even well stimulation techniques as previously described will be insufficient to maintain an acceptable productivity of the well. Despite the reduced formation pressure, nonetheless, the reservoir may still contain significant amounts of gas and/or oil reserves.

In addition, gas-condensate reservoirs contain gas reserves which tend to condense as a liquid when the formation pressure decreases below acceptable levels. The condensed gas is very difficult to recover.

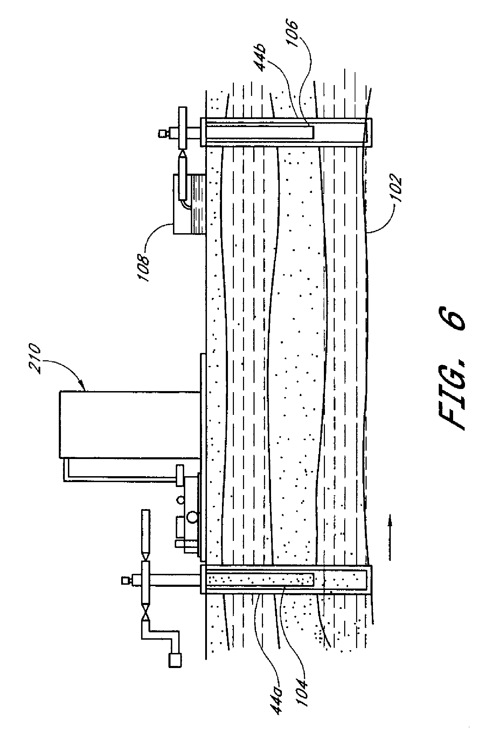

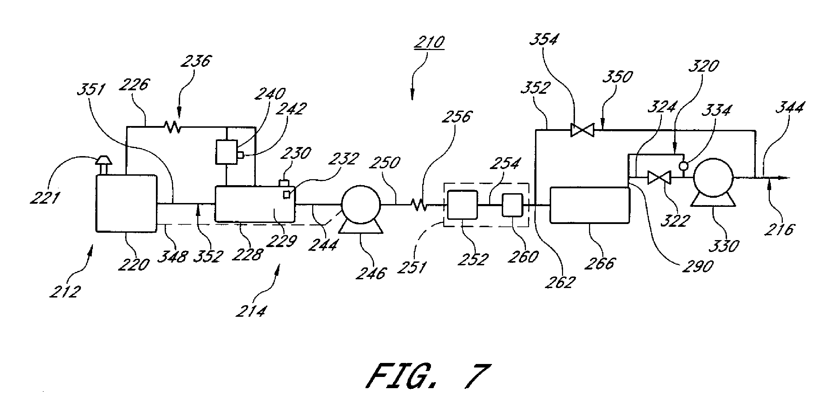

The lack of formation pressure in a reservoir can be remedied by injecting an inert rich gas directly into the reservoir. As illustrated highly schematically in Figure 6, an inert gas generation system is shown generally by numeral 210. The assembly is constructed above a gas and/or oil reservoir 102. Inert rich gas is pumped down the well, often called an injector well 44a, through a tubing 104 to exert pressure on the reserves in the direction of the arrow. The increased pressure on the gas and/or oil causes the same to flow to a producing formation and up a producing well 44b through a tubing 106 into an above ground collection vessel 108.

The flow rate of inert rich gas to the drilling region of an oil and/or gas well or a geothermal well can vary over a wide range depending on the size of the downhole, the depth of the well, the rate of drilling, the size of the drilling pipe, and the makeup of the geologic formation through which the well must be drilled. Some typical drilling operations require the production of from 1,500 to 3,000 standard cubic feet per minute (scfm) of nitrogen gas from the inert gas separation system 210, however, other flow rates can also be used. The inert rich gas can be pressurized up to a pressure of from about 1,500 to 2,000 psig before being passed to the drilling region, however, other pressures can also be used.

An average drilling operation can take about five days to two weeks, although difficult geologic formations may require several months of drilling. The inert rich gas delivery system is designed for continuous operation and all of the inert rich gas is generated on-site without the need for external nitrogen replenishment required for cryogenically produced liquid nitrogen delivery systems.

In a typical underbalanced drilling operation, 500 to 800 scfm (standard cubic feet per minute) of an inert rich gas is commingled with drilling mud to reduce the hydrostatic weight of the drilling fluid in the downhole region of a well. This reduces or prevents an overbalanced condition where drilling fluid enters the formation, or mud circulation is lost altogether. Carefully adjusting the weight of the drilling fluid will keep the formation underbalanced, resulting in a net inflow of gas and/or oil into the well.

If a drill string becomes stuck due to high differential pressure caused by combined hydrostatic and well pressure conditions, an inert rich gas at 1500-3000 scfm at pressures of 1000-2000 psig can be injected down the drill string to force the fluid up the annulus to the surface. The reduced weight and pressure will help free the stuck pipe. In this case, the inert rich gas is used as a displacement gas.

A naturally producing reservoir loses pressure (depletes) over time with a resulting loss in recoverable oil and/or gas reserves. Injection of nitrogen at 1500 scfm or greater at various locations or injection sites will keep the reservoir pressurized to extend its production life. In gas condensate reservoirs, the pressure is kept high enough to prevent gas condensation or liquification, which is difficult to remove once liquified.

The inert rich gas can be introduced into the producing wells by means of special valves in the production casing positioned in the downhole region of the well. The lifting action of the inert rich gas is one form of artificial gas lift as shown best in Figure 5.

It is contemplated that inert gas, such as nitrogen rich gas (N₂), can be used for various applications. For example, the inert gas can be used in manufacturing facilities. In one embodiment, inert gas can be used in semi-conductor manufacturing processes. Many kinds of inert gas (e.g., nitrogen gas) can be used to purge and provide an inert environment for semi-conductor wafer processing. The inert environment prevents air from contacting materials that are prone to oxidation. Nitrogen can be used to purge equipment, such as equipment used in refineries or petrochemical plants. For example, inert gas can be employed to purge fluid lines containing explosive or flammable fluids. Many kinds of fluid lines can be purged of dangerous fluids before components in the fluid system are replaced or repaired. Inert gases can also be used in other settings, such as for packaging to prevent oxidation of packed items.

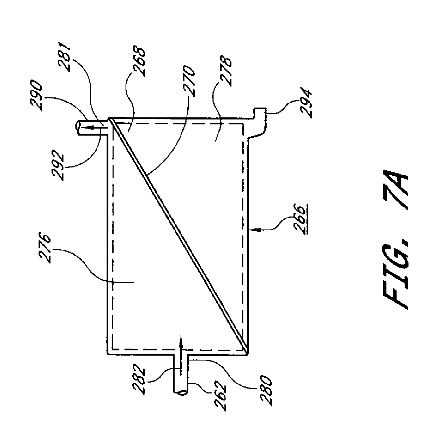

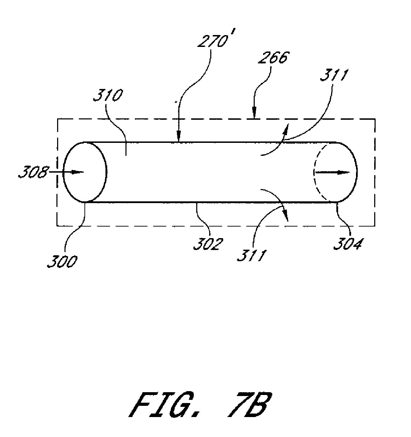

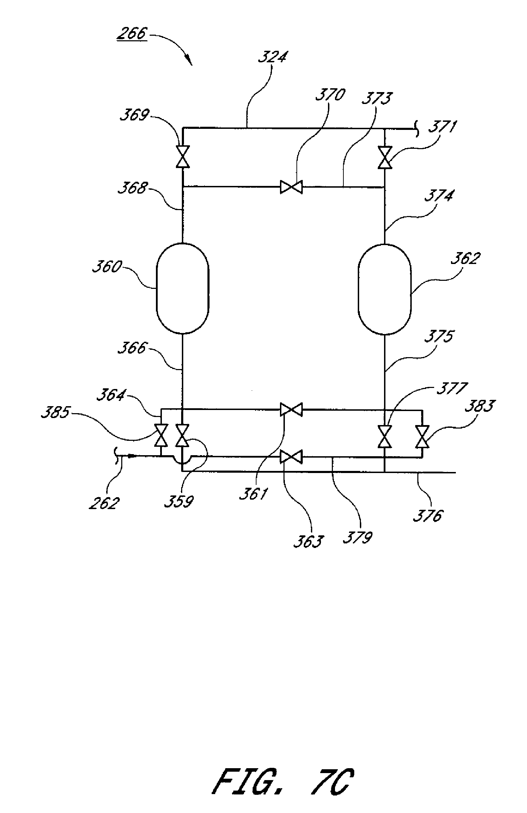

Figure 7 illustrates one embodiment of an inert gas generation system 210 that can provide a supply of inert gas. The system 210 can produce inert gas of suitable quality for use, for example, in drilling operations as described above. The inert gas generation system 210 preferably includes a flow source 212, a conditioning system 214, and an output 216 of the conditioning system 214.

The flow source 212 provides an output of fluid to the conditioning system 214. The flow source 212 can be configured to output any type of fluid having a reduced amount of oxygen and an inert portion. In the illustrated embodiment, the output of the flow source 212 is exhaust gas from a combustion process.

An output of the flow source 212 is connected to the conditioning system 214. The conditioning system 214 is configured to treat and/or condition the output to achieve desired flow characteristics of the flow passing out of output 216. For example, the conditioning system 214 can be configured to convert the output of the source 212 into a fluid with suitable pressure, purity, temperature, volumetric flow rate, and/or any other desirable characteristic depending on, for example, the end use of the output flow.

In one non-limiting embodiment, the inert gas generation system 210 is configured to produce a flow that comprises an inert gas. The inert gas can be a highly pure inert gas, such as Nitrogen gas. In one embodiment, the inert gas comprises mostly Nitrogen gas but can include other substances, such as Oxygen and particulates.

In the illustrated embodiment, the flow source 212 can comprises an air/fuel engine 220. The air/fuel engine 220 can comprise any type of air/fuel combustion engine, including open-system combustion engines such as, but without limitation, turbine engines, as well as internal combustion engines, including, but without limitation diesel, gasoline, four-stroke, two-stroke, rotary engine, and the like.

In an exemplary but non-limiting embodiment, the engine 220 is a diesel engine. The engine 220 can be normally aspirated, turbo-charged, super-charged, and the like. The construction and operation of such engines are well known in the art. Thus, a further description of the construction and operation of the engine 220 is not repeated herein.

In an exemplary but non-limiting embodiment, the engine 220 is configured to produce an output of about 400 - 650 horsepower (hp). In another exemplary but non-limiting embodiment, the engine 220 is configured to produce an output of about 550 hp. Optionally, the flow source 212 can comprise a plurality of similar or different engines 220. In one exemplary but non-limiting embodiment, the flow source 212 comprises one or more diesel engines and/or one or more gasoline engines. In another embodiment, the flow source 212 comprises a plurality of diesel engines.

The output from the engine 220 can contain various products of combustion. The exhaust produced by the engine 220 can include, gases, liquids, and particles. For example, the output can comprise gases such as argon, hydrogen (H₂), nitrogen (N₂), oxides of Nitrogen (NOₓ), carbon oxide (e.g., carbon monoxide (CO) and carbon dioxide (CO₂)), hydrocarbons, and/or other gases. The output can also comprise fluid such as water (H₂O) and oil. The output can also comprise particles such as diesel particulate matter, if the engine 220 is a diesel engine. Of course, the output of the flow source 212 will have different components depending on the type of flow source 212 that is employed.

The engine 220 can draw in ambient air through an air intake 221 and can produce exhaust containing both inert and non-inert gas. Preferably, the volume percentage of the inert gas output from the engine 220 is generally greater than the volume percentage of the inert gas typically present in ambient air.

In some embodiments, the volume percentage of the inert rich gas of the exhaust fluid produced by the engine 220 is at least 5% greater than the volume percentage of inert gas typically present in ambient air. In yet another embodiment, the volume percentage of the inert rich gas of the exhaust fluid produced by the engine 220 is at least 10% greater than the volume percentage of inert gas typically present in ambient air. In some embodiments, the proportion of inert gas in the exhaust of the engine 220 can be increased by increasing the power output from the engine 220.

For example, diesel engines do not have a throttle valves. Thus, when a diesel engine is operating at a power output level that is below full power, the amount of fuel burned in the engine is not sufficient to burn all of the air in the engine. Thus, fuel is burned in a "lean" mixture, i.e., non-stochiometric. Thus, the exhaust gas discharged from the engine 220 contains some oxygen. However, when the power output of a diesel engine is raised, more fuel is injected, and thus, more oxygen is "burned", thereby reducing the oxygen content of the exhaust. Thus, a further advantage is produced where the engine 220 used is sized such that during normal operation, the engine 220 is running under an elevated power output. For example, if the engine 220 is rated at about 550 horsepower, and the engine is operated at about 225 horsepower, the engine 220 will burn a substantial portion of the oxygen in the ambient air drawn into the engine 220. Further advantages are achieved where the engine 220 is operated at near maximum power. For example, if the engine 220 is operated at about 450 horsepower, the engine will burn nearly all of the oxygen present in the air. One of ordinary skill in the art recognizes that gasoline-burning engines operate under different air/fuel principles, and thus, the proportion of oxygen present in gasoline-powered engines does not vary substantially with power output.

Normally, exhaust gas produced by the engine 220 will contain less oxygen than ambient air. In one-embodiment, the exhaust gas can contains less than about 10% by volume of oxygen gas, depending on the air fuel ratio of a mixture combusted therein and operating load of the engine 220. As noted above, as the fuel injection rate of a diesel engine is increased, more oxygen is consumed, and thus, the oxygen content of the exhaust gas is similarly decreased. Preferably, the exhaust gas from the engine 220 comprises less than about 7% by volume oxygen. In another embodiment, the exhaust gas from the engine 220 contains less than about 5% by volume of oxygen gas. In another embodiment, the exhaust gas from the engine 220 comprises less than about 3% by volume of oxygen gas.

The low levels of oxygen gas contained in the exhaust gas can increase the inert gas purity of the gas discharged from the conditioning system output 216 of the conditioning system 214. Additionally, the condition system 214 can produce high purity inert gas even though the working pressure of the conditioning system 214 is very low. It is contemplated the type of engine 220 employed and the power output of the engine 220 can be varied by one of ordinary skill in the art to achieve the desired purity of the gas outputted from the engine 220. The operating conditions of the engine can also be controlled so as to produce the desired flow characteristics (e.g., volumetric flow rate, pressure, purity, and the like).

An exhaust conduit 226 connects the source 212 with the conditioning system 214. In the illustrated embodiment, the exhaust conduit 226 connects the engine 220 to a mixing plenum 228 of the conditioning system 214. The output of the engine 220 is exhaust flow or fluid that is passed through the exhaust conduit 226 and is fed into the mixing plenum 228.

Optionally, the inert gas generation system 210 can include a temperature control system 236 for controlling the temperature of the exhaust fluid before the exhaust fluid enters the mixing plenum 228. For example, the temperature control system 236 can include a heat exchanger configured to maintain the temperature of the exhaust fluid at a desired temperature.

In the some embodiments, the temperature control system 236 can increase or decrease the temperature of the exhaust fluid as it flows down the exhaust conduit 226. By removing heat from the exhaust fluid flowing through the exhaust conduit 226, a further advantage is provided in preventing undesirable effects, such as overheating, of downstream devices. Although not illustrated, the temperature control system 236 can include temperature sensors, pressure sensors, flow meters, or the like.

Preferably, the mixing plenum 228 is configured and sized to receive a continuous flow of exhaust fluid from the exhaust conduit 226. However, the mixing plenum 228 can be configured and sized to receive an intermittent flow or any type of flow of exhaust fluid. Additionally, the mixing plenum 228 can be adapted to receive the exhaust flow at various volumetric flow rates.

In an exemplary but non-limiting embodiment, the mixing plenum 228 includes a enlarged chamber 229. The chamber 229 can comprise a plurality of channels or tubes that are configured to mix the exhaust fluid with one or more other gases. For example, in some embodiments, the mixing plenum 228 can include the air intake 230 that draws in ambient air surrounding the mixing plenum 228 into the channels within the mixing plenum 228. The mixing plenum 228 can combine and mix the ambient air with the exhaust fluid to output a generally homogeneous or heterogeneous fluid to downstream sections of the conditioning system 214. In other embodiments, the mixing chamber is substantially sealed from ambient air.

Optionally, the mixing plenum 228 can have a controller 232 configured to selectively determine the mixture and content of the output flow from the mixing plenum. For example, the controller 232 can include a device (e.g., a motor) configured to agitate and mix the fluids contained within mixing plenum 228.

Optionally, a feedback device 240 can be configured to control the total level of inert and non-inert gases within the mixing plenum 228. For example, the feedback device 240 can include a controller 242 for controlling the proportion of exhaust fluid from the exhaust conduit 226 to the amount of ambient air from the air intake 230 contained within the mixing plenum 228. In some embodiments, the feedback device 240 can be configured to reduce the amount of air flowing into the air intake 230 so as to increase the purity of the downstream inert gas, described in greater detail below. The feedback device 240 can also be configured to increase the amount of ambient air flowing into the air intake 230 and into the mixing plenum 228 so as to reduce the purity of the downstream inert gas. Thus, the feedback device 240 can selectively increase and/or decrease the content and purity of the downstream fluid in the conditioning system 214.

Although not illustrated, the feedback device 240 can include one or more sensors configured to detect, for example, the level of the constituents within the mixing plenum 228 and/or within the exhaust conduit 226, the flow parameters (e.g., temperature, flow rate, pressure) of the exhaust fluid passing through the exhaust conduit 226, and the like. The feedback device 240 can be an open or closed loop system for controlling the flow of substances passing through the conditioning system 214.

For example, the feedback device 240 can be an open system that commands the temperature control system 236 wherein an operator can determine and set the temperature of the exhaust fluid fed into the mixing plenum 228. In another embodiment, the feedback device 240 can be a closed loop system and be configured to command the temperature control system 236 to dynamically change the temperature of the fluid passing through the conditioning system 214 depending on, for example, the temperature of the fluid passing out of the conditioning system output 216.

Optionally, gas analysis can be performed of the exhaust fluid from the source 212 to ensure gas compositions are within desired levels. Such an analysis can be incorporated into a process controller (not shown) integrated with the conditioning system 214, or any other part of the system 210. In one embodiment, the process controller is integrated with the controller 242. However, other components of the conditioning system 214 can have one or more process controllers for determining the composition of the fluid passing through the system 214 to control the composition of the output gas passing out of the conditioning system output 216.

The conditioning system 214 can also include a plenum conduit 244 that extends from the mixing plenum 228 to a compressor 246. Thus, fluid from the mixing plenum 228 can pass through the plenum conduit 244 and into the compressor 246.

In one non-limiting embodiment, the compressor 246 is configured to draw fluid from the mixing plenum 228 and increase the pressure thereof. For example, the compressor 246 can be configured to raise the pressure of the fluid from the mixing plenum 228 to pressures from about 100 psig to about 600 psig.

The compressor 246 can be any type of compressor. Preferably, the compressor 246 is a rotary screw type compressor. However, the compressor 246 can be a pump with fixed or variable displacement that causes an increased downstream fluid pressure. It is contemplated that one of ordinary skill in the art can determine the type of compressor to achieve the desired pressure increase of the fluid. For example, in one embodiment the compressor 246 is a booster compressor. Although not illustrated, the inert gas generation system 210 can have a plurality of compressors configured to draw fluid from the mixing plenum.

The compression process performed by the compressor 246 can be used to remove constituents from the exhaust fluid it receives from the plenum conduit 244. For example, the mixing plenum 228 can feed exhaust fluid that comprises water into the plenum conduit 244. The plenum conduit 244 then delivers the fluid to the compressor 246. The compression process of the compressor 246 can remove an amount, preferably a significant amount, of water from the fluid. In one exemplary non-limiting embodiment, a water knock out vessel is included in the compressor 246 to collect water removed from the fluid. Additionally, a coalescent filter (not shown) can be provided to remove additional entrained water and oil carryover that may be present in the output fluid.

The conditioning system 214 can also include a compressor conduit 250 that extends from the compressor 246 to a filtration unit 251.

The filtration unit 251 can include one or more devices to remove components from the fluid delivered by the compressor conduit 250. In the illustrated embodiment, the filtration unit 251 includes a filtration system 252 and a particulate filter 260. In one non-limiting exemplary embodiment, fluid delivered from the compressor 246 can pass through the compressor conduit 250 and into the filtration unit 251.

Optionally, the conditioning system 214 can also include a temperature control system 256 configured to adjust the temperature of fluid passing through the compressor conduit 250. Preferably, the temperature control system 256 is configured to lower the temperature of the fluid proceeding along the compressor conduit 250 to a desired temperature.

For example, the temperature control system 256 and the compressor 246 can work in combination to adjust the temperature of the fluid passing therethrough to a desired temperature to prevent, for example, overheating of downstream components (e.g., the filtration unit 251). In at least one embodiment, the compressor 246 can provide fluid to compressor conduit 250 at a predetermined pressure. The temperature control system 256 can be configured to increase or decrease the temperature of the fluid to adjust the pressure of the fluid. For example, the temperature control system 256 can reduce the temperature of the fluid passing through the compressor conduit 250 to reduce the pressure of the fluid delivered to the filtration unit 251. Alternatively, the temperature control system 256 can increase the temperature of the fluid passing through the compressor conduit 250 to increase the pressure of the fluid delivered to the filtration unit 251.

The temperature control system 256 can be different or similar to the temperature control system 236. In at least one embodiment, the temperature control system 256 is a heat exchanger that can rapidly change the temperature of the fluid that passes along the compressor conduit 250. Similar to the temperature control system 236, the temperature control system 256 can be part of an open or closed loop system.

The filtration unit 251 can be configured to capture and remove undesirable substances from the exhaust fluid. The filtration unit 251 can include a filtration system 252 configured to remove undesired substances that may be present in the exhaust fluid. For example, the filtration system 252 can be configured to capture selected gas impurities. In one embodiment, the filtration system 252 can capture carbon oxides, hydrocarbons, aldehydes, nitrogen oxides (e.g., typically nitric oxide and a small fraction of nitrogen dioxide), sulfur dioxide, and/or other particulate that may be in the exhaust fluid. The filtration system 252 can comprise one or more absorption filters and/or vessels that are suitable for removing one or more undesirable substances.

With continued reference to Figure 7, the filtration unit 251 of the conditioning system 214 can also include a filtration system conduit 254 that extends from the filtration system 252 to the particulate filter 260. Such a particulate filter 260 can comprise of one or more absorption filters and/or vessels. The particulate filter 260 can be configured to remove particulates that may undesirably adversely affect, for example, the performance of downstream components of the conditioning system 214 or purity of the gas produced by the conditioning system 214. If the engine 220 is a diesel engine, the particulate filter 260 is preferably a filter that captures and removes diesel particulate matter from the fluid passing therethrough. In one embodiment, the particulate filter 260 removes a substantial portion of the particulate matter from the fluid.

The system 210 can also include an additional heat exchanger downstream from the particulate filter 260. The heat exchanger can be configured to adjust the temperature of the filtered fluid from the particulate filter 260. Raising the temperature of the upstream fluid can be beneficial because such heating reduces the likelihood that any remaining water vapor will condense out and damage downstream components. Optionally, the additional heat exchanger can be provided with heat from upstream temperature control systems (e.g., temperature control systems 236, 256). For example, the temperature control system 236 can be a heat exchanger that cools the exhaust fluid produced by the engine 220. The heat removed by the heat exchanger 236 can be delivered to the additional downstream heat exchanger. The additional heat exchanger can then use that energy to heat the filtered fluid preferably at some point downstream of the filtration unit 251. It is contemplated that at least one of the temperature control systems can provide energy (e.g., heat) to another temperature control system or heat exchanger. One of ordinary skill in the art can determine the type, location, and configuration of one or more temperature control systems to control the temperature of the exhaust fluid as desired.

The system 210 can also include a particulate conduit 262 which extends from the particulate filter 260 to a separation unit 266.

With reference to Figure 7 and 7A, the conditioning system 214 can also include a device adapted for separating inert substances from non-inert substances. In the illustrated embodiment, the conditioning system 214 includes the separation unit 266. In one embodiment, the separation unit 266 is a membrane separation unit including a chamber 268 and a separation membrane 270 (shown in Figure 7A) within the chamber 268. As shown in Figure 7A, the membrane separation unit 266 has a membrane 270 that partitions the chamber 268 into a plurality of chambers.

In the illustrated embodiment, the membrane 270 divides the chamber 268 into an inert chamber 276 and a non-inert chamber 278. Preferably, during operation of the system 210 at least a portion of the inert chamber 276 contains fluid that comprises mostly inert gas, and the non-inert chamber 278 contains mostly non-inert gas that is filtered from the exhaust fluid. Additionally, the separation unit 266 can have an inlet 280 and an outlet 281 that are located on the same side of the membrane 270. Both the inlet 280 and the outlet 281 can be in fluid communication with the inert chamber 276. Preferably, the inlet 280 and outlet 281 are in fluid communication with opposing portions of the inert chamber 276.

The inert chamber 276 can be sized and configured to define a flow path between the inlet 280 and the outlet 281. The non-inert chamber 278 can be sized and configured to define a flow path between the membrane 270 and the vent 294. Preferably, the vent 294 is located on one side of the membrane 270 and both the inlet 280 and the outlet 281 are located on the other side of the membrane 270.

The membrane 270 can be configured to allow certain substances to pass therethrough at a first flow rate and other substances to pass therethrough at a second flow rate different than the first flow rate. For example, such membrane separation units 266 can be provided with a membrane 270 that allows different gases to pass therethrough at different rates. The effect is that the retentate gas, i.e., gases that do not permeate through the membrane 270, remain on the inlet side of the membrane 270 within the inert chamber 276. These gases proceed along the chamber 276 towards, and eventually pass through, the outlet 281. The permeate gases, preferably non-inert gas, of the fluid delivered through the inlet 280 pass through the membrane 270 and through the non-inert chamber 278 and are discharged out of the vent or outlet 294 into the atmosphere, or are further sequestered.

In an exemplary but non-limiting embodiment, the membrane 270 is an elongated generally planar membrane extending across the chamber 268 and is configured to allow the migration of fluid (e.g., gas) therethrough. Fluid, preferably comprising gases, enters the inert chamber 276 through the inlet 280, some gases pass through the membrane 270 while others do not. In some membrane separation units 266, the membrane 270 can be configured to allow non-inert gases (e.g., oxygen) to pass more readily through the membrane 270 and inert gas (e.g., nitrogen) to pass through the membrane 270 at a much lower rate. The membrane 270 can thus be used to separate fluid passing in through the inlet 280 into an inert gas flow that passes out of the outlet 281 and a non-inert gas flow that passes through the membrane 270 and out of the vent 294.

In one embodiment, fluid passing through the inlet 280 and into the separation unit 266 can include, for example but without limitation, nitrogen gas, oxygen gas, oxides of carbon, oxides of nitrogen, and oxide of sulfur, as well as other trace gases. The membrane 270 can be configured to allow one or more of the non-inert gases, such as oxygen gas, to pass therethrough at a relatively higher rate than the rate at which inert gas, such as nitrogen gas, can pass therethrough. Other gases such as carbon dioxide, oxides of nitrogen, oxides of sulfur, and other trace gases may also pass at a higher rate through the membrane 270 than rate at which nitrogen gas passes through the membrane 270. The inert gases are thus captured in the inert chamber 276 and the non-inert gases pass through the membrane 270 and into the non-inert chamber 278. The result is that the gas remaining in the inert chamber 276 has a high concentration of inert gases. Of course, the concentration of the inert gas of in the inert chamber 276 can vary along the inert chamber 276 in the downstream direction. Preferably, the gas in the inert chamber 276 and proximate to the outlet 281 comprises substantially inert gas.

In the present exemplary but non-limiting embodiment, the fluid within the inert chamber 276 can be largely nitrogen gas and may include other inert gases. For example, the inert chamber 276 can contain inert gases such as, for example, without limitation, argon, carbon monoxide, and hydrocarbons. Preferably, most of the hydrocarbons have been filtered out of the exhaust fluid produced by the engine 220 by the filtration unit 251. Optionally, the membrane 270 can be configured to allow water vapor to pass therethrough at a higher rate than the rate at which nitrogen gas can pass therethrough. Thus, the separation unit 266 can receive fluid having water, inert gases, and non-inert gases. The separation unit 266 can produce a first flow of mostly inert gas flow and a second flow of non-inert gas and water. The first flow passes through the inert chamber 276 and out of the outlet 281 and the second flow passes through the membrane 270 and then through the non-inert chamber 278 and out of the vent 294.

Figure 7B illustrates an embodiment of a membrane that can be employed by the separation unit 266 to filter fluid. The components of the system 266 have been identified with the same reference numerals as those used to identify corresponding components of the system 210, except that " ' " has been used.

In one exemplary but non-limiting embodiment, the membrane 270' can be a hollow fiber, semi-permeable membrane. A body 302 of the membrane 270' can allow certain substances to pass therethrough at a first flow rate and other substances to pass therethrough at a second flow rate different than the first flow rate. Although not illustrated, the hollow fiber membrane 270' can be disposed in the chamber 268 of the unit 266 shown in Figure 7A. The construction of this type of membrane separation unit is well-known in the art, and thus, a further detailed description of the system 266 is not included herein.

The hollow fiber membrane 270' can include an inlet 300, the body 302, a central chamber 310, and an outlet 304. The hollow fiber membrane 270' can separate the fluid provided by the conduit 262 (Figure 7) into a purified inert gas flow and a non-inert gas flow. In some embodiments, with reference to Figure 7B, fluid passing through the conduit 262 can pass into the separation unit 266 and into the inlet 300 of the membrane 270' in the direction indicated by the arrow 308. The fluid entering the membrane 270' can include nitrogen gas, oxygen gas, carbon dioxide, oxides of nitrogen, and oxides of sulfur, as well as other trace gases. As the fluid flows through the central chamber 310 defined by the body 302, the fluid is separated into its component gases migrate through the body 302. Preferably, the membrane 270' separates the fluid it receives into a first stream of mostly inert fluid that passes through the chamber 310 and out of the outlet 304 and another stream of fluid that passes through the body 302 of the membrane 270' in the direction indicated by arrows 311. That is, a stream of inert gases passes through the chamber 310 and out of the outlet 304. The separation unit 266 then delivers those inert gases to the conduit 290 (see Figure 7). The non-inert gases which pass through the body 302 of the membrane 270' can be directed to the vent 294 of the unit 266 and discharged into the atmosphere, or further sequestered.

Although not illustrated, the separation unit 266 can include any suitable number of membranes 270'. The membrane separation 266 may have an increased or reduced number of membranes 270' for an increased or reduced, respectively, filtering capacity of the separation unit 266. For example, the separation unit 266 can include thousands or millions of the hollow fiber semi-permeable membranes 270' that are bundled or packed together. The separation unit 266 can therefore have an extremely large membrane surface area capable of filtering out non-inert gas from the fluid passing through the conditioning system 214. Of course, the length of the membrane 270' can be varied to achieve the desired membrane surface area and pressure drop across the separation unit 266.

The separation unit 266 can receive exhaust fluid from the conduit 262 and remove at least a portion of the non-inert component of the exhaust fluid. The separation unit 266 can then output an inert rich gas. In one exemplary embodiment, the separation unit 266 can produce inert rich gas that comprises at least 96% by volume of inert gas. In one exemplary embodiment, the separation unit 266 can produce inert rich gas that comprises about 98% by volume of inert gas. In another embodiment, the inert rich gas comprises about 99% by volume of inert gas. In yet another embodiment, the inert rich gas comprises about 99.9% by volume of inert gas. Advantageously, because the separation unit 266 only has to remove a low amount of non-inert gas from the exhaust fluid provided by the conduit 262, the separation unit 266 can produce highly pure inert rich gas at high volumetric flow rates. The separation unit 266 can therefore rapidly separate the exhaust flow into non-inert rich gas and an inert rich flow. In one embodiment, the separation unit 266 removes less than about 10% by volume of the fluid and discharges highly pure inert rich gas.

Optionally, the conditioning system 214 can comprise a plurality of separation units 266. Each of separation units 266 can include one or more membranes 270', or membrane 270. Thus, each of the membrane separation units 266 can comprise one or more similar or dissimilar membranes. It is contemplated that a plurality of separation units 266 of the conditioning system 214 can be in a parallel configuration or in a series configuration. For example, a plurality of membrane separation units 266 can be in series along the conditioning system 214 to provide an extremely pure inert fluid, preferably a gas, out of the conditioning system output 216. Each of the separation units 266 can increase the purity of the inert gas passing through the conditioning system 214.

In one exemplary but non-limiting embodiment of Figure 7C, the separation unit 266 is a pressure swing adsorption system (PSA) that preferably produces a purified inert gas. The PSA 266 may comprise a plurality of beds for producing inert rich gas. Preferably, each of the beds includes an adsorption material (e.g., carbon molecular sieve or silica gel) adapted to adsorb a non-inert component at a faster rate than the rate of absorption of inert components. In one non-limiting embodiment, the PSA 266 includes a pair of beds 360, 362 and each bed 360, 362 can have adsorption material adapted to adsorb oxygen at a higher rate than its rate of absorption of nitrogen. Thus, oxygen is quickly trapped by the beds 360, 362 and nitrogen can pass, preferably easily, through each of the beds. The pressure upstream of the PSA 266 can be increase or decrease to increase or decrease, respectively, the flow rate at which gases pass through the beds 360, 362. Additionally, the proportion of the inert gas to the non-inert gas produced by the PSA 266 can be increased or decreased by decreasing or increasing, respectively, the upstream pressure.

During a first production cycle, the valves 359, 361, 363 are closed and the fluid from the conduit 262 flows through the conduits 364, 366 and into the bed 360. The adsorption material in the bed 360 captures the non-inert substances in the fluid flow and allows fluid comprising a high proportion of inert substances (e.g., nitrogen gas) to non-inert substances to pass therethrough. The inert substance, preferably inert fluid (e.g., an inert rich gas), then passes out of the bed 360 and into the conduits 368, 324. The conduit 324 can then deliver the inert rich gas to the conduit 290 (Figure 7).

While fluid flows through the bed 360, the bed 362 can optionally undergo depressurization and can be purged by, for example, nitrogen rich fluid to remove non-inert substances, such as oxygen, that has accumulated in the bed 362. The filtering capacity of the bed 362 is thus increased due to the removal of substances from the bed. For example, the valves 369, 371 can be closed so that fluid provided by the bed 360 pass through the conduits 368, 373, 374 and into the bed 362 to purge the bed 362. The purge fluid can pass out of the bed 362 and into the conduits 375, 376. The purge fluid preferably comprises substantial amounts of non-inert gas such as oxygen and other trace gases. Although not illustrated, the separation system 266 can have a purge container that contains a fluid that can be used to purge the beds 360, 362.

During a second cycle, the valves 363, 377 are opened and the valves 383, 385 are closed. Fluid from the conduit 262 passes through the conduit 379 and into the conduit 375 and through the bed 362. The bed 362 can capture non-inert components of the fluid and permit inert components to flow into the conduits 374, 324. While the fluid flows through the bed 362, the bed 360 can optionally undergo depressurization and can be purged by some, for example, nitrogen rich fluid to remove oxygen that has accumulated in the bed 360. For example, the valves 371, 369 can be closed and the valve 370 can be opened so that fluid from the bed 362 passes through the conduits 374, 373, 368 to purge the bed 360. Of course, the purge cycle can be performed periodically during a production cycle.

In the illustrated embodiment, the first cycle can be performed until the bed 360 has reached a predetermined saturation level. For example, the first cycle can be performed until the bed 360 is generally completely saturated. After the bed 360 is saturated, the bed 360 can be purged so that the non-inert substances captured by the bed 360 are discharged. After the first cycle, the second cycle can be performed until the bed 362 likewise reaches a predetermined saturation level. The bed 362 and be subsequently purged to remove non-inert substances from the bed 362. These acts can be repeated to produce highly purified inert rich gas.

Optionally, the conditioning system 214 (Figure 7) can also include a purity control system 320 for controlling the purity of the fluid passing out of the conditioning system output 216. The purity control system 320 can selectively determine the purity of the fluid passing to the conditioning system output 216. In one embodiment, the purity control system 320 can comprise one or more valves for restricting the flow of fluid from the separation unit 266 and may have one or more sensors for measuring the contents of the fluid flow produced by the separation unit 266.

In an exemplary but non-limiting embodiment, the purity control system 320 includes a valve 322 for restricting the flow of fluid from the separation unit 266, preferably a membrane separation unit. When the inert gas concentration from the separation unit 266 is below a predetermined amount, the valve 322 can selectively restrict the flow through the conduit 324 so as to raise the pressure in the membrane separation unit 266. In the illustrated embodiment of Figure 7 and 7A, when the valve 322 inhibits the flow through the conduit 324 which extends from the conduit 290 to a compressor 330, the pressure within the inert chamber 276 is increased. By raising the pressure in the inert chamber 276, the volumetric flow rate of gas passing through the membrane 270 and into the non-inert chamber 278 is increased. Thus, because a greater amount of permeate gas passes through the membrane, there is increased concentration of the inert gas discharged from the membrane separation unit 266. Of course, the reduced upstream pressure may reduce the volumetric flow rate of the fluid passing out the output 216.

When the separation unit 266 produces an inert gas concentration above a predetermined amount, the valve 322 can be opened so as to increase the flow rate of fluid through the conduit 324. By opening the valve 322, the upstream pressure can be reduced in the conditioning system 214 while providing an increased output from the output 216. For example, by reducing the pressure in the separation unit 266 having a membrane, the volumetric flow rate of gas passing from the inert chamber 276 through the membrane 270 (Figure 7A) and into the non-inert chamber 278 may be reduced. Thus, a reduced amount of permeate gas may pass through the membrane. In this manner, the proportion of the inert gas to non-inert gas of the fluid discharged from the separation unit 266 into the conduit 290 may be reduced. Thus, the valve 322 can be operated to determine the volumetric flow rate and/or the purity of the fluid outputted from the conditioning system 214. One of ordinary skill in the art can determined the desired purity of the gas flowing from the conditioning system 214 and the desired volumetric flow rate based on the use of the gas.

With reference to Figure 7, the purity control system 320 can also include an inert gas sensor 334 that is configured to detect flow parameters (e.g., the concentration of inert gases of the fluid, the amount of fluid emanating from the separation unit 266, and the like). The measurements from the inert gas sensor 334 can be used to adjust the amount of fluid that flows through the conduit 324 by operating the valve 322. It is contemplated that the purity control system 320 can be an open or closed loop system.

Optionally, the conditioning system 214 can also include the compressor 330 (e.g., a booster pump) that can be used to raise the pressure of the gas discharged from the separation unit 266 to a desired pressure. In some embodiments, the booster compressor 330 can be configured to raise the pressure of gas to about 1000 psig. In one embodiment, the booster compressor 330 can increase the pressure of the inert rich gas about 200 psig to about 4000 psig. For example, the booster compressor 330 can increase the pressure of the exhaust fluid to about 1000 psig to about 2000 psig. However, the booster compressor 330 can increase the pressure to any suitable pressure depending on the use of the inert rich gas. Inert gas from the booster compressor 330 can be passed through a conduit 344 and out of the conditioning system output 216 to the upper portion 348 of a drill stem arrangement 18, as illustrated in Figure 1. The gas can continue to flow until it reaches the drill stem assembly 20 as described above. Thus, the compressor 330 can be selectively configured to raise the pressure of the gas to various pressure levels depending on the desired flow characteristic of the gas passing through the drill stem arrangement 18.

The engine 220 can be selected and configured to provide sufficient flow of exhaust fluid for generating the desired amount of inert gas outputted from the conditioning system 214 for any of the uses of inert gas described herein. That is, the engine 220 can be selected to output different levels of purity and different gas flow rates. Additionally, the operating speed of the engine 220 can be controlled to further ensure that the desired amount of exhaust fluid is delivered to the condition system 214. The conditioning system 214 is preferably configured to produce and deliver generally highly pure inert gas which is then, in turn, used by, for example but without limitation, a drilling operation. It is contemplated that various components can be removed from or added to the conditioning system 214 to achieved the desired flow characteristics of the output fluid flow. For example, the compressor 246 and the booster compressor 330 can be configured so that the conditioning system output 216 discharges inert fluid at a sufficient pressure and volumetric flow rate for any of the uses disclosed herein. Additionally, the filtration system 252 and the particulate filter 260 can be configured to remove any undesirable substance in the exhaust fluid produced by the engine 220. Optionally, one or more components of the conditioning system 214 can be removed, or not used during a production cycle. For example, during an operation cycle, the filtration system 252 and the particulate filter 260 can be off-line if some substances do not need to be filtered out of the exhaust fluid. In another operation cycle, the filtration system 252 and the particulate filter 260 can be online such that the inert gas generating system 210 provides an extremely pure inert gas from the conditioning system output 216.

In an exemplary but non-limiting embodiment, the conditioning system 214 may have a bypass system 350 for controlling the mixture of the fluid flow flowing out of the conditioning system output 216. For example, the bypass system 350 can include a bypass system conduit 352 which extends from a location upstream from the unit 266 to a location of the conditioning system 214 downstream from the unit 266. In the illustrated embodiment, the bypass system conduit 352 extends from the particulate conduit 262 to the conduit 344. However, the bypass system conduit 352 can extend from any point along the conditioning system 214 upstream from the separation unit 266 to any point of the conditioning system 244 downstream from the separation unit 266.

In the illustrated embodiment, the flow passing through the conduit 262 can be separated into a first flow flowing into the separation unit 266 and a second flow flowing into the bypass system conduit 352. An amount of the first flow can pass through the separation unit 266 and through the conduits 290, 324, compressor 330, and the conduit 344. Of course, the separation unit 266 can filter out non-inert portions of the first flow. The concentrated inert gas flow produced by the separation unit 266 can be combined with the second gas flow passing through the conduit 352 at the junction of the conduits 352, 344. Thus, when the concentration of inert gas produced by the conditioning system 214 is below a predetermined amount, the bypass system 350 can reduce, or stop, the flow of fluid through the conduit 352. By reducing the flow of the fluid through the conduit 352, the purity of gas discharged from the conditioning system output 216 can be increased.

Alternatively, when the concentration of inert gas produced by the conditioning system 214 is above a predetermined amount, the bypass system 350 can increase the amount of fluid flowing through the conduit 352 and which is then combined with the inert fluid flow produced by the separation unit 266. In this manner, the concentration of inert gas outputted from the conditioning system output 216 can be reduced. The bypass system 350 can therefore be operated to selectively control and determine the purity of the inert gas produced and delivered out of the conditioning system 214. Optionally, of course, the operating speed of the engine 220 can be varied to control the purity and the amount of gas discharged from the conditioning system.

Optionally, the bypass system 350 can include a valve 354 that can be used to selectively control the flow rate of the fluid passing through the conduit 352. Those skilled in the art recognize that the valves of the conditioning system 214 may be manually or automatically controlled and may comprise sensors.

Optionally, a further advantage can be achieved wherein one or more of the components of the conditioning system 214 can be powered by the engine 220. This provides the advantage that the source of the exhaust fluid can also be used to provide power to various components of the conditioning system 214. Preferably, engine 220 can provide sufficient power to operate one or more of the components of the conditioning system 214. Thus, those components may not require any additional power from another power source.

In some embodiments, engine 220 can produce exhaust fluid and a another secondary output, such electrical power. For example, the engine 220 can be a generation system (e.g., a generator) that generates power in the form of electricity. The electricity can be passed through an electrical line 348 and can be delivered to a motor of the compressor 246. The electricity generated from the engine 220 can therefore be used to power the compressor 246. The engine 220 advantageously provides exhaust fluid that can be treated by the conditioning system 214 to produce a highly pure inert gas and can be used to power the compressor 246. It is contemplated that one of ordinary skill in the art can determine the appropriate sized engine 220 to provide the desired power suitable for driving one or more of the components, such as compressor 246.

Although not illustrated, the engine 220 can be in communication with other components of the conditioning system 214. For example, the engine 220 can be in communication with the booster 330. An electric power line can provide electrical communication between the engine 220 and the booster 330. Additionally, the engine 220 can provide power to the compressor 246 and the booster 330 simultaneously, or independently.

Optionally, the engine 220 can be in communication with one or more of the temperature control systems of the conditioning system 214. For example, the engine 220 can provide power in the form of electricity to a temperature control system that can increase the temperature of the fluid passing through the conditioning system 214. Optionally, the valves 322 and 354 may be automatic valves that are also powered by the engine 220. The valve 322, 354 can comprise controllers and other sensor devices that can optionally be powered by the engine 220.

The engine 220 can be in communication with one or more of the feedback devices of the conditioning system 214. Although not illustrated, the engine 220 can have a communication line connected, for example but without limitation, to the feedback device 240 and also the inert gas sensor 334. The feedback devices may selectively control the operating speed of the engine 220. For example, if the exhaust fluid flow reaches a predetermined volumetric flow rate, a feedback device may reduce the engine's operating speed. Additionally, the operating speed of the engine 220 may be selectively controlled to determine the amount of power produce by the engine 220. In one embodiment, the operating speed of the engine 220 can be increased or decreased to increase or decrease, respectively, the amount of electricity produced by the engine 220.

Optionally, a further advantage can be achieved where the engine 220 can provide mechanical power to one or more components of the conditioning system 214. In an exemplary but non-limiting embodiment, the engine 220 has a mechanical output system 351 in the form of an output shaft 352 that can be connected to one or more of the components of the conditioning system 214. For example, the output shaft 352 in the illustrated embodiment is connected to the mixing plenum 228. As the engine 220 operates, the output shaft 352 rotates. The rotation of the output shaft 352 can be used to agitate the fluid contained in the mixing plenum 228. In one embodiment, the rotational movement of the output shaft 352 is translated into linear movement of at least one plenum within the mixing plenum 228. The movement of the plenum can agitate fluid comprising the exhaust fluid and the air drawn through the air intake 230. Although not illustrated, a further advantage is achieved where the output shaft 352 is connected to the compressor 246 to as to drive the compressor 246. In the system 10, the compressor 246 can require substantial power to compress the gases flowing therethrough. Thus, by driving the compressor with a shaft from the engine 220, the compressor 246 can be driven more efficiently. For example, a direct shaft drive connection between the engine 220 and the compressor 246 avoids the losses generated by converting shaft power from the engine 220 into electricity, then back to shaft power with an electric motor at the compressor 246. Further, the entire system 210 can be made lighter and more easily portable. For example, a mechanical connection between the engine 220 and the compressor 246 can eliminate the need for an electric motor for driving the compressor 246.

Optionally, a further advantage can be achieved where at least one or more devices of the drilling operation uses inert gas and/or power produced by the engine 220. For example, various components of the drill stem arrangement 18 (Figure 1) can use inert rich gas produced by the conditioning system 214 and can be operated by power generated by the engine 220. Many devices, such as lights, fans, blowers, venting systems, and/or other electrical devices, can receive power generated by the engine 220. For example, in one limiting embodiment, the engine 220 generates power that operates the compressor 246, the booster 330, lights proximate to the generation system 210, a fan which blows across the inert gas generating system 210, and/or a plurality of lights that illuminate the area surrounding the drilling operation.

The engine 220 can also provide power to a battery or storage device. For example, the engine 220 can operate and can deliver power in the form of electricity to a battery which, in turn, stores the power. The battery can then deliver power to one or more components of the conditioning system 214 or the drilling operation.

In operation generally, the engine 220 can be operated to generate exhaust fluid. The exhaust fluid can pass through the exhaust conduit 226 and into the mixing plenum 228. The exhaust fluid can be discharged from the mixing plenum 228 and through the plenum conduit 244 and into the compressor 246. The compressor 246 can increase the pressure of the exhaust gas and deliver the exhaust gas through the conduit 250 to the filtration unit 251. The filtration unit 251 can remove various substances from the exhaust fluid, which is then passed through the separation unit 266. The separation unit 266 can receive fluid having a first concentration of inert gas and output a fluid having a second concentration of inert gas higher than the first concentration. The inert gas can then be passed through the conduits 290, 324 and into the booster compressor 330. The booster compressor 330 can increase the pressure of the fluid and discharged the fluid to the conduit 344 which, in turn, delivers the fluid out of the output 216.

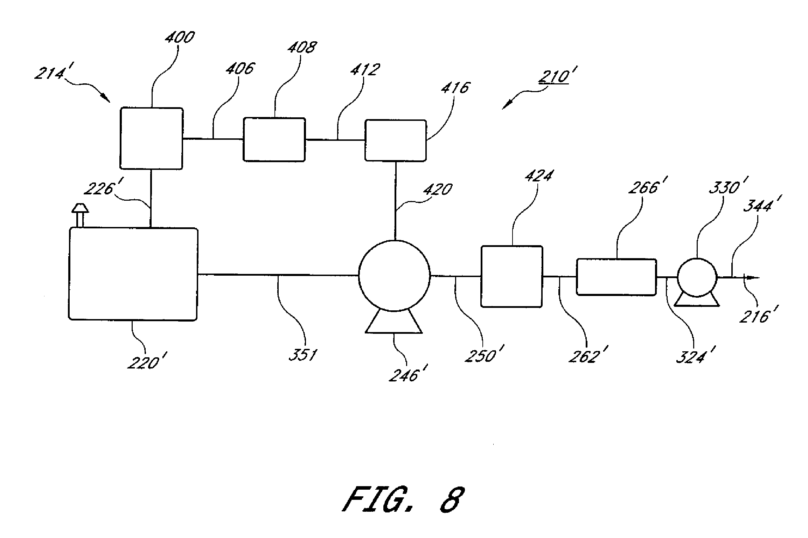

Figure 8 illustrates a modified generation system and is identified generally by the reference numeral 210'. The components of the system 210' have been identified with the same reference numerals as those used to identify corresponding components of the system 210, except that " ' " has been used. Thus, the descriptions of those components are not repeated herein.

In the illustrated embodiment, the conduit 226' extends from the engine 220' to a filtration unit, such as a catalytic converter 400. The catalytic converter 400 can remove many of the components of the exhaust fluid passing through the conduit 226'. In an exemplary but non-limiting embodiment, the catalytic converter 400 can be configured to remove non-inert components of the exhaust fluid, such as carbon monoxide, hydrocarbons, volatile organic compounds, and/or nitrogen oxides (nitrogen oxide or nitrogen dioxide) to increase the purity of the inert gas of the exhaust fluid.

In an exemplary but non-limiting embodiment, the catalytic converter 400 of the conditioning system 214' comprises a reduction catalyst and oxidation catalyst that operate to take non-inert components out of the exhaust fluid. It is contemplated that the catalytic converter can be an oxidation or three way type catalytic converter depending on the desired removal of the non-inert components of the exhaust fluid. The construction and operation of such catalytic converter is well known in the art and thus further description of the construction and operation is not repeated herein.

A catalytic converter conduit 406 extends between the catalytic converter 400 and a fluid separation unit 408. Preferably, the fluid separation unit 408 includes a high temperature membrane configured to remove the water from the exhaust fluid passing therethrough.

For example, the engine 220' can output exhaust fluid comprising various gases and a liquid, such as water. The fluid separation unit 408 can remove the water from the exhaust fluid as the fluid passes through the unit 408. In one embodiment, the fluid separation unit 408 has a membrane (not shown) that is configured to allow gases to pass therethrough without permitting the passage of water. In other words, the gas component of the exhaust fluid can flow into and out of the fluid separation unit 408 and into the conduit 412. The membrane of the fluid separation unit 408 can remove water from the exhaust fluid and deliver it to a water knock out vessel in the unit 408. The water knock out vessel can be periodically removed from the unit 408 and emptied. Additionally, a coalescing filter (not shown) can be provided to remove oil carryover that may be present in the exhaust fluid.

Optionally, the fluid separation unit 408 can have a heat exchanger to increase the temperature of the fluid delivered by the conduit 406. The heat exchanger can increase the temperature of the liquid component of the exhaust fluid for easy removal of the liquid.

The conditioning system 214' can also include a temperature control system 416 that is connected to the fluid separation conduit 412. The temperature control system 416 can be configured to increase or reduce the temperature of the exhaust fluid fed from the fluid separation conduit 412. Because the fluid separation unit 408 may have features, such as a heat exchanger, to raise the temperature of the exhaust fluid, the temperature control system 416 can be configured to reduce the temperature of the exhaust fluid to desirable temperatures for feeding the exhaust through the temperature control system conduit 420 and into the compressor 246'.

The conditioning system 214' can have a compressor 246' which raises the pressure of the exhaust fluid. The compressor 246' then delivers the fluid to a compressor conduit 250', which, in turn, feeds the exhaust fluid to a filtration unit 424. That filtration unit 424 can be configured to capture and remove undesired substances that may be present in the exhaust fluid. The filtration unit 424 can be can similar or different than the filtration unit 251.

The exhaust fluid from the filtration system 424 can pass through the conduit 262' and into the separation unit 266'. The separation unit 266' can be similar or different that the units illustrated in Figures 7A, 7B, and 7C. The separation unit 266' can receive exhaust fluid and can remove at least a portion of the non-inert component of the exhaust fluid and pass inert rich gas into the conduit 324'. The inert fluid can then be fed into the booster pump 330'. The booster pump 330' can increase or decrease the pressure of the fluid and can pass the fluid into the conduit 344' and out of the conduit system output 216'.

The engine 220', of course, can generate and provide power to one or more components of the conditioning system 214'. For example, the engine 220' can be in electrical communication with at least one of the compressors 246', 330'. The engine 220' can therefore power one or more of the compressors which can provide a pressure increase in the conditioning system 214. Optionally, the engine 220' can provide power to any other type of power consumption device.

Optionally, a further advantage can be achieved where the inert gas generation systems 210, 210' can be arranged in one or plurality of containers. For example, but without limitation, the systems 210, 210' can be assembled into a single ISO container or broken down into simple parts and assembled into a plurality of ISO or other containers. An ISO container containing parts or complete inert gas generation system 210, or 210', can be conveniently transported to various locations.

The various methods and techniques described above provide a number of ways to carry out the disclosed embodiments. Of course, it is to be understood that not necessarily all objectives or advantages described may be achieved in accordance with any particular embodiment described herein. Thus, for example, those skilled in the art will recognize that the methods may be preformed in a manner that achieves or optimizes one advantage or group of advantages as taught herein without necessarily achieving other objectives or advantages as may be taught or suggested herein.

Furthermore, the skilled artisan will recognize the interchangeability of various features from different embodiments disclosed herein. Similarly, the various features and steps discussed above, as well as other known equivalents for each such feature or step, can be mixed and matched by one of ordinary skill in this art to perform methods in accordance with principles described herein. Additionally, the methods which is described and illustrated herein is not limited to the exact sequence of acts described, nor is it necessarily limited to the practice of all of the acts set forth. Other sequences of events or acts, or less than all of the events, or simultaneous occurrence of the events, may be utilized in practicing the embodiments of the invention.

Although the inventions have been disclosed in the context of certain embodiments and examples, it will be understood by those skilled in the art that the inventions extend beyond the specifically disclosed embodiments to other alternative embodiments and/or uses and obvious modifications and equivalents thereof. Accordingly, the inventions are not intended to be limited by the specific disclosures of preferred embodiments herein.

## Claims

1. A method for producing inert gas comprising:
operating a combustion engine so as to produces an exhaust gas, the exhaust gas comprising non-inert gas and inert gas, the volume percentage of non-inert gas of the exhaust gas is less than the volume percentage of non-inert gas of ambient air;
using power from the combustion engine to compress the exhaust gas; and
separating a portion of the inert gas from the non-inert gas contained in the exhaust gas.

2. The method of Claim 1, further comprising passing the exhaust gas through the separation unit, and the separation unit comprises a membrane adapted to remove non-inert substances from the exhaust fluid.

3. The method of Claim 2, wherein the volume percentage of non-inert gas of the exhaust gas is substantially less than the volume percentage of non-inert gas of ambient air.

4. The method of Claim 1, further comprising delivering power provided by the engine to a power consumption device.

5. The method of Claim 4, wherein the power consumption device is a control device for controlling an operating parameter of the step of separating.

6. The method of Claim 1, wherein the inert rich gas comprises at least about 98% by volume of inert gas.

7. The method of Claim 6, wherein the inert rich gas comprises at least about 99% by volume of inert gas.

8. The method of Claim 7, wherein the inert rich gas comprises at last about 99.9% by volume of inert gas.

9. The method of Claim 1, wherein the non-inert gas is less than about 10% by volume of oxygen gas.

10. The method of Claim 1, further comprising providing electrical power produce by the engine to a compressor in fluid communication with the engine and the separation unit.

11. The method of Claim 1 further comprising delivering the inert gas from the separation unit to the down hole region of a well during a drilling operation.

12. A system for producing inert gas comprising an air/fuel engine having an exhaust outlet, a compressor having a compressor outlet and an inlet communicating with the exhaust outlet, the compressor being powered by the engine and configured to compress exhaust gas from the engine, and a separation device having a separation inlet communicating with the compressor outlet and configured to separate inert and non-inert gases from the exhaust.

13. The system in accordance with Claim 12, wherein the engine includes an output shaft, the output shaft driving the compressor.

14. The system in accordance with Claim 12 additionally comprising a generator driven by the engine, the generator providing electrical power for the system.

15. The system in accordance with Claim 12 additionally comprising a frame, the engine and the compressor being mounted to the frame.

16. The system in accordance with Claim 15, the frame defining a portion of an ISO container.

17. The system in accordance with Claim 12, wherein the separation device is a membrane separation unit.

18. The system in accordance with Claim 12, wherein the engine is a diesel engine.

19. A system for producing inert gas comprising a compressor having a compressor outlet and an inlet, the compressor being configured to compress source gas, and a separation device having a separation inlet communicating with the compressor outlet and configured to separate inert and non-inert gases from the source gas, and at least one single means for providing both source gas and power to the compressor.

20. The system in accordance with Claim 19, wherein the source gas is combustion exhaust gas.
